# EUROPEAN PATENT SPECIFICATION

(11) **EP 3 318 096 B1**
(45) Date of publication and mention of the grant of the patent: **29.09.2021**
(21) Application number: 16745903.1
(22) Date of filing: 30.06.2016
(51) Int. Cl.: H04W 72/04, H04W 92/18, H04W 28/02

(54) **TECHNIQUES FOR REPORTING BUFFER STATUS IN WIRELESS COMMUNICATIONS**
VERFAHREN ZUR BENACHRICHTIGUNG DES PUFFERSTATUS IN DRAHTLOSEN KOMMUNIKATIONEN
TECHNIQUES POUR RAPPORTER UN ÉTAT DE MÉMOIRE TAMPON DANS DES COMMUNICATIONS SANS FIL

(30) Priority: 02.07.2015 US 201562188225 P; 29.06.2016 US 201615197477
(43) Date of publication of application: 09.05.2018
(73) Proprietor: Qualcomm Incorporated, San Diego, CA 92121-1714 (US)
(72) Inventor: BAGHEL, Sudhir Kumar, San Diego, California 92121-1714 (US); PATIL, Shailesh, San Diego, California 92121-1714 (US); TAVILDAR, Saurabha Rangrao, San Diego, California 92121-1714 (US); GULATI, Kapil, San Diego, California 92121-1714 (US); JIANG, Libin, San Diego, California 92121-1714 (US)
(74) Representative: Dunlop, Hugh Christopher
(86) International application number: PCT/US2016/040328
(87) International publication number: WO 2017/004341

(56) References cited:
- EP-A2- 2 688 226
- WO-A1-2014/069223
- GB-A- 2 514 373
- US-A1- 2014 023 008
- SAMSUNG: "Mode 1 resource allocation for D2D broadcast communication", 3GPP DRAFT; R1-142112 MODE 1 RESOURCE ALLOCATION FOR D2D BROADCAST COMMUNICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, [Online] vol. RAN WG1, no. Seoul; 20140519 - 20140523, 18 May 2014 (2014-05-18), XP050787709, Retrieved from the Internet: URL:http://www.3gpp.org/ftp/Meetings_3GPP_ SYNC/RAN1/Docs/> [retrieved on 2014-05-18]
- ERICSSON: "Resource allocation for D2D transmitters in coverage", 3GPP DRAFT; R2-140625 - RESOURCE ALLOCATION FOR D2D TRANSMITTERS IN COVERAGE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, [Online] vol. RAN WG2, no. Prague, Czech Republic; 20140210 - 20140214, 9 February 2014 (2014-02-09), XP050791937, Retrieved from the Internet: URL:http://www.3gpp.org/ftp/Meetings_3GPP_ SYNC/RAN2/Docs/> [retrieved on 2014-02-09]

## Description

### BACKGROUND

Described herein are aspects generally related to communication systems, and more particularly, to indicating buffer status in wireless communications.

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example of a telecommunication standard is Long Term Evolution (LTE). LTE is a set of enhancements to the Universal Mobile Telecommunications System (UMTS) mobile standard promulgated by Third Generation Partnership Project (3GPP). Developments in LTE include vehicle-to-vehicle (V2V), vehicle-to-pedestrian (V2P), vehicle-to-infrastructure (V2I), etc. communications (collectively referred to herein as "V2X") where vehicle-based user equipment (UE) can communicate with other UEs in a network directly with or without the assistance of a base station to schedule communication resources. For example, vehicle-based UEs can directly communicate messages to one another over the communication resources via LTE to indicate collision warnings, which can cause certain operations at the vehicles. In other examples, vehicle-based UEs can directly communicate periodic status reports to infrastructure, which can be reported to other network entities, etc.

Additionally, in LTE, UEs presently communicate buffer status reports (BSR) to base stations to facilitate receiving an allocation of resources from the base stations for communicating in the wireless network. A BSR typically indicates a number of bytes in a buffer at the UE that are occupied by data to be transmitted in the wireless network. The base station utilizes the number of bytes in determining a resource allocation for granting to the device to facilitate communicating the data with the base station. The format of BSRs currently used in LTE to indicate a number of bytes in the buffer may not be useful in allocating resources for V2X communications.

EP 2 688 226 A2 (LG ELECTRONICS INC [KR]) 22 January 2014, relates to allocation of device to device (D2D) resources in wireless communication systems. US 2014/023008 A1 (AHN JAE-YOUNG [KR] ET AL) 23 January 2014, relates to connection configuration and scheduling method of a D2D link for performing direct D2D communication and UE relaying. GB 2 514 373 A (BROADCOM CORP [US]) 26 November 2014, relates to signalling for a user equipment to provide information to a radio network about radio resources requested for device-to-device communications. SAMSUNG: "Mode 1 resource allocation for D2D broadcast communication", 3GPP DRAFT; R1-142112 MODE 1 RESOURCE ALLOCATION FOR D2D BROADCAST COMMUNICATION, 3RD GENERATION PARTNERSHIP PROJECT (3GPP), MOBILE COMPETENCE CENTRE ; 650, ROUTE DES LUCIOLES; F-06921 SOPHIAANTIPOLIS CEDEX ; FRANCE, vol. RAN WG1, no. Seoul; 20140519 - 20140523,18 May 2014, relates to resource allocation for D2D communications. ERICSSON: "Resource allocation for D2D transmitters in coverage", 3GPP DRAFT; R2-140625 - RESOURCE ALLOCATION FOR D2D TRANSMITTERS IN COVERAGE, 3RD GENERATION PARTNERSHIP PROJECT (3GPP), MOBILE COMPETENCE CENTRE ; 650, ROUTE DES LUCIOLES ; F-06921 SOPHIAANTIPOLIS CEDEX ; FRANCE, vol. RAN WG2, no. Prague, Czech Republic; 20140210 - 20140214, 9 February 2014, relates to resource allocation for D2D transmitters and discusses how an eNodeB may distinguish between a legacy BSR and a D2D BSR. WO 2014/069223 A1 (KYOCERA CORP [JP]) 8 May 2014 relates a mobile communication system that supports D2D communication.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

The invention is defined by the appended independent claims and further embodiments are described by the dependent claims.

### BRIEF DESCRIPTION OF THE DRAWINGS

FIG. 1 shows a block diagram conceptually illustrating an example of a telecommunications system, in accordance with aspects described herein.
FIG. 2 is a diagram illustrating an example of an access network.
FIG. 3 is a diagram illustrating an example of an evolved Node B and user equipment in an access network.
FIG. 4 is a diagram illustrating an example system for communicating buffer status reports (BSR) in accordance with aspects described herein.
FIG. 5 is a flow chart of an example method for transmitting a BSR in accordance with aspects described herein.
FIG. 6 is a flow chart of an example method for communicating a resource allocation based on a BSR in accordance with aspects described herein.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, modules, components, circuits, steps, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

Accordingly, in one or more aspects, the functions described may be implemented in hardware, software, firmware, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), and floppy disk where disks usually reproduce data magnetically, while discs reproduce data optically with lasers. Combinations of the above should also be included within the scope of computer-readable media.

Described herein are various aspects related to indicating buffer status for devices in vehicle-to-vehicle (V2V), vehicle-to-pedestrian (V2P), vehicle-to-infrastructure (V2I), etc. communications (collectively referred to herein as "V2X"). In V2X communications, it can be important that each message be transmitted separately to ensure that the entire message is transmitted and received in single communication over a period of time. This can be due to criticality or importance of some messages, such as a message to report a collision warning. As such, vehicle-based user equipment (UE) can generate buffer status reports (BSR) that can specify additional details of messages to be communicated in the wireless network by the vehicle-based UE (e.g., messages in one or more buffers at the vehicle-based UE). For example, vehicle-based UEs can generate BSRs that indicate a message size for each of a plurality of messages stored in the buffer for communicating to one or more devices in the wireless network. For instance, the BSR can specify a list of message sizes corresponding to each (or at least one or more) message in the buffer in this regard. A base station allocating resources to the UE can accordingly allocate resources based on the size of one or more of the messages to facilitate transmitting one or more of the messages from the buffer, each in its entirety, in a single communication over a period of time.

Moreover, for example, the BSR may indicate a number of messages in the buffer (e.g., as an explicit indication and/or based on the number of message sizes in the BSR). The BSR may also indicate a message type of one or more of the messages in the buffer. The base station may determine additional parameters for allocating the resources based on the message type, such as a priority for allocating resources for the messages and/or the like. The BSR may additionally indicate a target range, a target transmission power, a target priority, a target latency, etc. for the one or more messages, which the base station can utilize in determining the resource allocation for the vehicle-based UE. In an example, the messages may relate to application-layer messages communicated in V2X communications, and the BSR may be part of media access control (MAC) layer communications such that the application-layer information of message size, number of messages, message type, etc. is communicated between the UE and the base station via MAC layer communications.

Though described in terms of V2X communications, it is to be appreciated that the concepts described below with respect to indicating message sizes in BSRs can be applied to substantially any type of message-based communications to facilitate providing additional information regarding the messages for more accurate resource allocation by a base station or other network entity for communicating one or more of the individual messages in a single transmission.

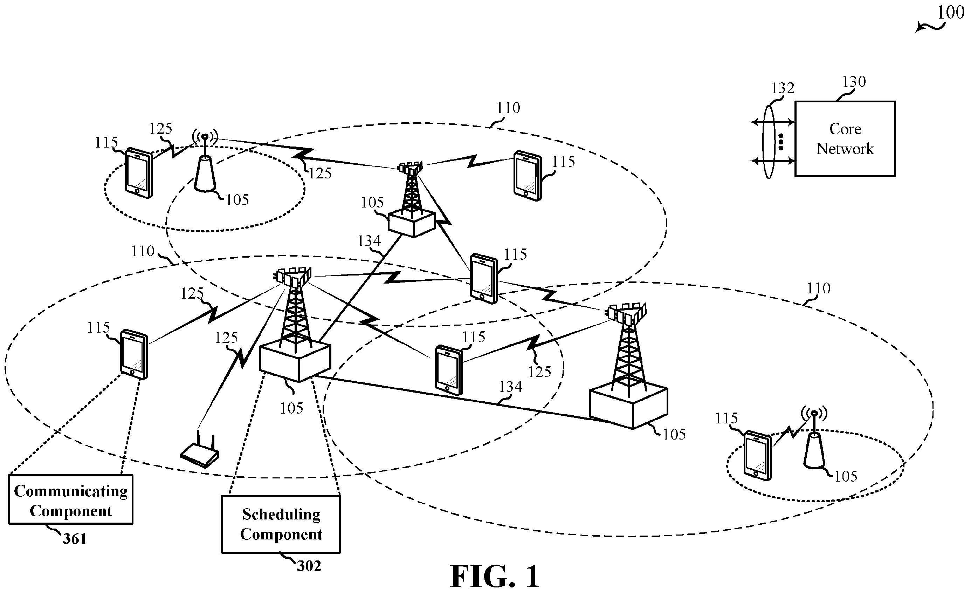

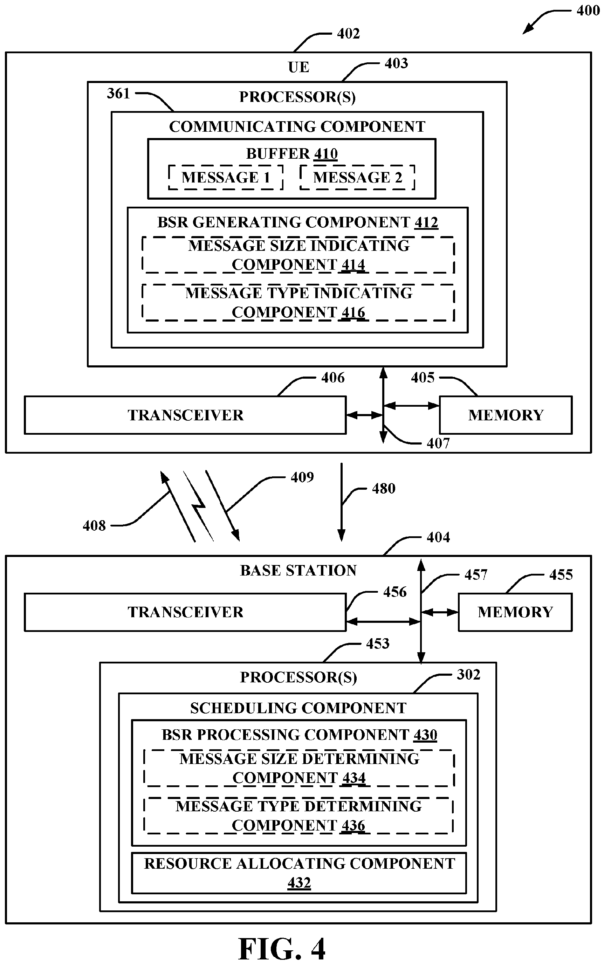

Referring to FIG. 1, a diagram illustrates an example of a wireless communications system 100, in accordance with aspects described herein. The wireless communications system 100 includes a plurality of base stations (e.g., eNBs, WLAN access points, or other access points) 105, a number of user equipment (UEs) 115, and a core network 130. One or more UEs 115 may include a communicating component 361 (*see e.g.*, FIG. 4) configured to generate an indication of buffer status of one or more buffers (e.g., a BSR) indicating at least a number of messages and/or a size of the messages to facilitate allocation of resources to the one or more UEs 115. Similarly, one or more base stations 105 may include a scheduling component 302 (*see e.g.*, FIG. 4) configured to receive an indication of buffer status of one or more buffers (e.g., a BSR) from the one or more UEs 115 and accordingly schedule resources for transmitting one or more of the messages based at least in part on a size of the message(s) indicated in the BSR.

For example, the UEs 115 may include vehicle-based UEs communicating using V2X communications (e.g., based on LTE radio access technology defined for device-to-device communications). Accordingly, for example, the UEs 115 may communicate with one another (e.g., with or without the assistance of a base station 105 to schedule resources) using a direct message-based communication. In an example, communicating component 361 may report BSR to one or more UEs 115 also including a communicating component 361 for negotiating resources based on the BSR. Some of the base stations 105 may communicate with the UEs 115 under the control of a base station controller (not shown), which may be part of the core network 130 or the certain base stations 105 (e.g., eNBs) in various examples. Base stations 105 may communicate control information and/or user data with the core network 130 through backhaul links 132. In examples, the base stations 105 may communicate, either directly or indirectly, with each other over backhaul links 134, which may be wired or wireless communication links. The wireless communications system 100 may support operation on multiple carriers (waveform signals of different frequencies). Multi-carrier transmitters can transmit modulated signals simultaneously on the multiple carriers. For example, each of communication links 125 may be a multi-carrier signal modulated according to the various radio technologies described above. Each modulated signal may be sent on a different carrier and may carry control information (e.g., reference signals, control channels, etc.), overhead information, data, etc.

The base stations 105 may wirelessly communicate with the UEs 115 via one or more base station antennas. Each of the base stations 105 sites may provide communication coverage for a respective coverage area 110. In some examples, base stations 105 may be referred to as a base transceiver station, a radio base station, a radio transceiver, a basic service set (BSS), an extended service set (ESS), a NodeB, eNodeB, Home NodeB, a Home eNodeB, or some other suitable terminology. The coverage area 110 for a base station may be divided into sectors making up only a portion of the coverage area (not shown). The wireless communications system 100 may include base stations 105 of different types (e.g., macro, micro, and/or pico base stations). The base stations 105 may also utilize different radio technologies, such as cellular and/or WLAN radio access technologies (RAT). The base stations 105 may be associated with the same or different access networks or operator deployments. The coverage areas of different base stations 105, including the coverage areas of the same or different types of base stations 105, utilizing the same or different radio technologies, and/or belonging to the same or different access networks, may overlap.

In LTE/LTE-Advanced (LTE-A), for example, the terms evolved Node B (eNodeB or eNB) may be generally used to describe the base stations 105. The wireless communications system 100 may be a Heterogeneous LTE/LTE-A network in which different types of access points provide coverage for various geographical regions. For example, each base station 105 may provide communication coverage for a macro cell, a pico cell, a femto cell, and/or other types of cell. Small cells such as pico cells, femto cells, and/or other types of cells may include low power nodes or LPNs. A macro cell may cover a relatively large geographic area (e.g., several kilometers in radius) and may allow unrestricted access by UEs 115 with service subscriptions with the network provider. A small cell may cover a relatively smaller geographic area and may allow unrestricted access by UEs 115 with service subscriptions with the network provider, for example, and in addition to unrestricted access, may also provide restricted access by UEs 115 having an association with the small cell (e.g., UEs in a closed subscriber group (CSG), UEs for users in the home, and the like). An eNB for a macro cell may be referred to as a macro eNB An eNB for a small cell may be referred to as a small cell eNB An eNB may support one or multiple (e.g., two, three, four, and the like) cells.

The core network 130 may communicate with the eNBs or other base stations 105 via a backhaul links 132 (e.g., S1 interface, etc.). The base stations 105 may also communicate with one another, e.g., directly or indirectly via backhaul links 134 (e.g., X2 interface, etc.) and/or via backhaul links 132 (e.g., through core network 130). The wireless communications system 100 may support synchronous or asynchronous operation. For synchronous operation, the base stations 105 may have similar frame timing, and transmissions from different base stations 105 may be approximately aligned in time. For asynchronous operation, the base stations 105 may have different frame timing, and transmissions from different base stations 105 may not be aligned in time. The techniques described herein may be used for either synchronous or asynchronous operations.

The UEs 115 are dispersed throughout the wireless communications system 100, and each UE 115 may be stationary or mobile. A UE 115 may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. A UE 115 may be a cellular phone, a personal digital assistant (PDA), a wireless modem, a wireless communication device, a handheld device, a tablet computer, a laptop computer, a cordless phone, a wearable item such as a watch or glasses, a wireless local loop (WLL) station, a vehicle-based UE, or the like. A UE 115 may be able to communicate with macro eNodeBs, small cell eNodeBs, relays, and the like. A UE 115 may also be able to communicate over different access networks, such as cellular or other WWAN access networks, or WLAN access networks.

The communication links 125 shown in wireless communications system 100 may include uplink (UL) transmissions from a UE 115 to a base station 105, and/or downlink (DL) transmissions, from a base station 105 to a UE 115. The downlink transmissions may also be called forward link transmissions while the uplink transmissions may also be called reverse link transmissions. The UEs 115 may be configured to collaboratively communicate with multiple base stations 105 through, for example, Multiple Input Multiple Output (MIMO), carrier aggregation (CA), Coordinated Multi-Point (CoMP), multiple connectivity, or other schemes. MIMO techniques use multiple antennas on the base stations 105 and/or multiple antennas on the UEs 115 to transmit multiple data streams.

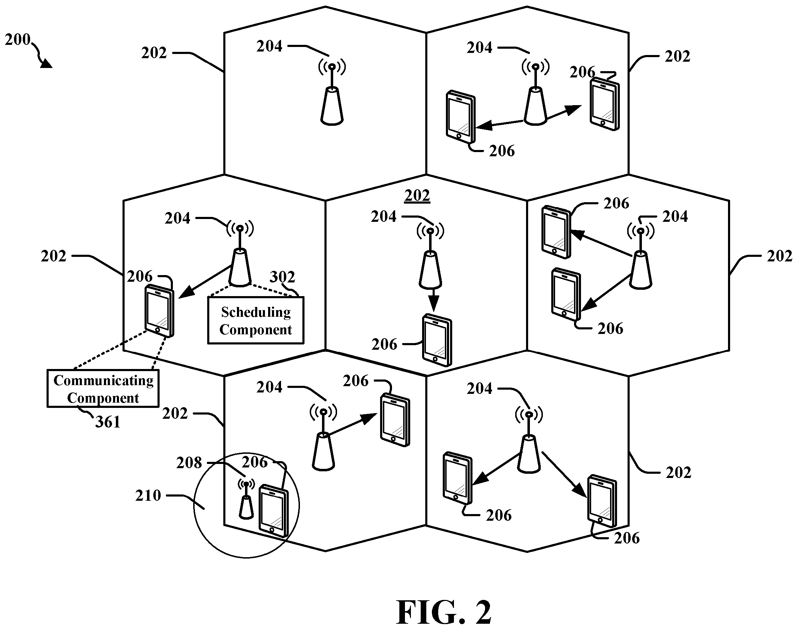

FIG. 2 is a diagram illustrating an example of an access network 200 in an LTE network architecture. In this example, the access network 200 is divided into a number of cellular regions (cells) 202. One or more small cell base stations 208 of a lower power class than macro base stations 204. The small cell base stations 208 may have cellular regions 210 that overlap with one or more of the cells 202. The small cell base stations 208 may be a femto cell (e.g., home eNB (HeNB)), pico cell, micro cell, or remote radio head (RRH). The macro base stations 204 are each assigned to a respective cell 202 and are configured to provide an access point to the core network 130 for all the UEs 206 in the cells 202. As described, the UEs 206 may be vehicle-based UEs communicating using V2X or other message-based communication technologies.

In an aspect, one or more UEs 206 may include a communicating component 361 (*see e.g.*, FIG. 4) configured to generate a BSR indicating at least a number of messages and/or a size of the messages in a buffer at the UE 206 to facilitate allocation of resources to (or by) the one or more UEs 206. Similarly, one or more base stations 204/208 may include a scheduling component 302 (*see e.g.*, FIG. 4) configured to receive a BSR from the one or more UEs 206 and accordingly schedule resources for transmitting one or more of the messages by the UE 206 based at least in part on a size of the message(s) indicated in the BSR. There is no centralized controller in this example of an access network 200, but a centralized controller may be used in alternative configurations. The base stations 204 are responsible for all radio related functions including radio bearer control, admission control, mobility control, scheduling, security, and connectivity to one or more components of core network 130.

The modulation and multiple access scheme employed by the access network 200 may vary depending on the particular telecommunications standard being deployed. In LTE applications, OFDM may be used on the DL and SC-FDMA may be used on the UL to support both frequency division duplexing (FDD) and time division duplexing (TDD). As those skilled in the art will readily appreciate from the detailed description to follow, the various concepts presented herein are well suited for LTE applications. However, these concepts may be readily extended to other telecommunication standards employing other modulation and multiple access techniques. By way of example, these concepts may be extended to Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. These concepts may also be extended to Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), IEEE 802.11 (Wi-Fi), IEEE 802.16 (WiMAX), IEEE 802.20, and Flash-OFDM employing OFDMA. UTRA, E-UTRA, UMTS, LTE and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

The base stations 204 may have multiple antennas supporting MIMO technology. The use of MIMO technology enables the base stations 204 to exploit the spatial domain to support spatial multiplexing, beamforming, and transmit diversity. Spatial multiplexing may be used to transmit different streams of data simultaneously on the same frequency. The data steams may be transmitted to a single UE 206 to increase the data rate or to multiple UEs 206 to increase the overall system capacity. This is achieved by spatially precoding each data stream (i.e., applying a scaling of an amplitude and a phase) and then transmitting each spatially precoded stream through multiple transmit antennas on the DL. The spatially precoded data streams arrive at the UE(s) 206 with different spatial signatures, which enables each of the UE(s) 206 to recover the one or more data streams destined for that UE 206. On the UL, each UE 206 transmits a spatially precoded data stream, which enables the base stations 204 to identify the source of each spatially precoded data stream.

Spatial multiplexing is generally used when channel conditions are good. When channel conditions are less favorable, beamforming may be used to focus the transmission energy in one or more directions. This may be achieved by spatially precoding the data for transmission through multiple antennas. To achieve good coverage at the edges of the cell, a single stream beamforming transmission may be used in combination with transmit diversity.

In the detailed description that follows, various aspects of an access network will be described with reference to a MIMO system supporting OFDM on the DL. OFDM is a spread-spectrum technique that modulates data over a number of subcarriers within an OFDM symbol. The subcarriers are spaced apart at precise frequencies. The spacing provides "orthogonality" that enables a receiver to recover the data from the subcarriers. In the time domain, a guard interval (e.g., cyclic prefix) may be added to each OFDM symbol to combat inter-OFDM-symbol interference. The UL may use SC-FDMA in the form of a DFT-spread OFDM signal to compensate for high peak-to-average power ratio (PAPR).

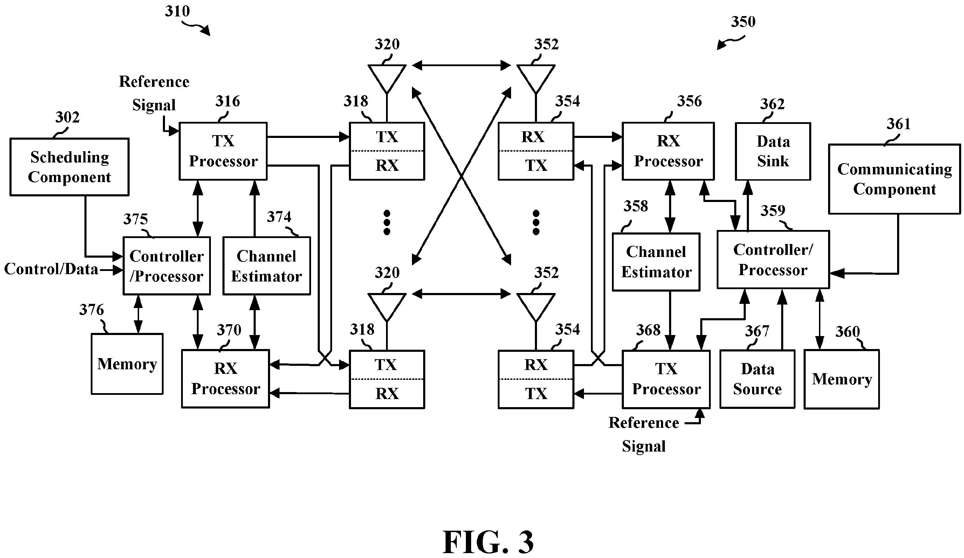

FIG. 3 is a block diagram of a base station 310 in communication with a UE 350 in an access network. In the DL, upper layer packets from the core network are provided to a controller/processor 375. The controller/processor 375 implements the functionality of the L2 layer. In the DL, the controller/processor 375 provides header compression, ciphering, packet segmentation and reordering, multiplexing between logical and transport channels, and radio resource allocations to the UE 350 based on various priority metrics. The controller/processor 375 is also responsible for HARQ operations, retransmission of lost packets, and signaling to the UE 350.

The transmit (TX) processor 316 implements various signal processing functions for the L1 layer (i.e., physical layer). The signal processing functions includes coding and interleaving to facilitate forward error correction (FEC) at the UE 350 and mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols are then split into parallel streams. Each stream is then mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream is then provided to a different antenna 320 via a separate transmitter 318TX. Each transmitter 318TX modulates an RF carrier with a respective spatial stream for transmission. In addition, base station 310 may include a scheduling component 302 (*see e.g.*, FIG. 4) configured to receive a BSR from the one or more UEs 350 and accordingly schedule resources for transmitting one or more of the messages based at least in part on a size of the message indicated in the BSR. Though scheduling component 302 is shown as coupled to controller/processor 375, it is to be appreciated that scheduling component 302 can also be coupled to other processors (e.g., RX processor 370, TX processor 316, etc.) and/or implemented by the one or more processors 316, 370, 375 to perform actions described herein

At the UE 350, each receiver 354RX receives a signal through its respective antenna 352. Each receiver 354RX recovers information modulated onto an RF carrier and provides the information to the receive (RX) processor 356. The RX processor 356 implements various signal processing functions of the L1 layer. The RX processor 356 performs spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the timedomain to the frequency domain using a Fast Fourier Transform (FFT). The frequency domain signal comprises a separate OFDM symbol stream for each subcarrier of the OFDM signal. The symbols on each subcarrier, and the reference signal, is recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359.

The controller/processor 359 implements the L2 layer. The controller/processor can be associated with a memory 360 that stores program codes and data. The memory 360 may be referred to as a computer-readable medium. In the UL, the controller/processor 359 provides demultiplexing between transport and logical channels, packet reassembly, deciphering, header decompression, control signal processing to recover upper layer packets from the core network. The upper layer packets are then provided to a data sink 362, which represents all the protocol layers above the L2 layer. Various control signals may also be provided to the data sink 362 for L3 processing. The controller/processor 359 is also responsible for error detection using an acknowledgement (ACK) and/or negative acknowledgement (NACK) protocol to support HARQ operations. In addition, UE 350 may include a communicating component 361 (*see e.g.*, FIG. 4) configured to generate a BSR indicating at least a number of messages and/or a size of the messages to facilitate allocation of resources to the one or more UEs 350. Though communicating component 361 is shown as coupled to controller/processor 359, it is to be appreciated that communicating component 361 can also be coupled to other processors (e.g., RX processor 356, TX processor 368, etc.) and/or implemented by the one or more processors 356, 359, 368 to perform actions described herein.

In the UL, a data source 367 is used to provide upper layer packets to the controller/processor 359. The data source 367 represents all protocol layers above the L2 layer. Similar to the functionality described in connection with the DL transmission by the base station 310, the controller/processor 359 implements the L2 layer for the user plane and the control plane by providing header compression, ciphering, packet segmentation and reordering, and multiplexing between logical and transport channels based on radio resource allocations by the base station 310. The controller/processor 359 is also responsible for HARQ operations, retransmission of lost packets, and signaling to the base station 310.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 are provided to different antenna 352 via separate transmitters 354TX. Each transmitter 354TX modulates an RF carrier with a respective spatial stream for transmission.

The UL transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370. The RX processor 370 may implement the L1 layer.

The controller/processor 375 implements the L2 layer. The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover upper layer packets from the UE 350. Upper layer packets from the controller/processor 375 may be provided to the core network. The controller/processor 375 is also responsible for error detection using an ACK and/or NACK protocol to support HARQ operations.

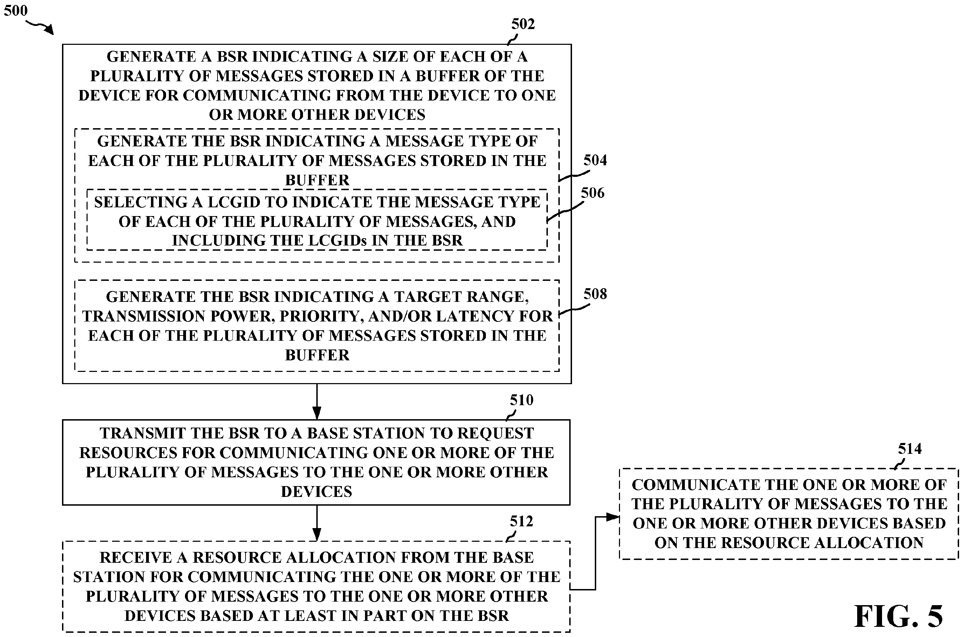

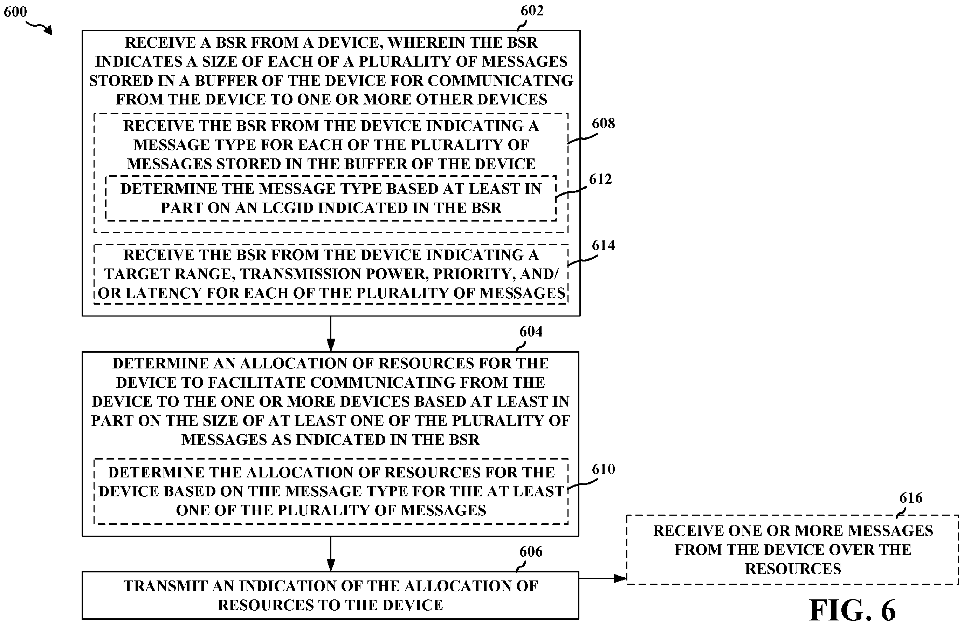

Referring to FIGs. 4-6, aspects are depicted with reference to one or more components and one or more methods that may perform the actions or functions described herein. In an aspect, the term "component" as used herein may be one of the parts that make up a system, may be hardware or software or some combination thereof, and may be divided into other components. Although the operations described below in FIGs. 5 and 6 are presented in a particular order and/or as being performed by an example component, it should be understood that the ordering of the actions and the components performing the actions may be varied, depending on the implementation. Moreover, it should be understood that the following actions or functions may be performed by a specially-programmed processor, a processor executing specially-programmed software or computer-readable media, or by any other combination of a hardware component and/or a software component capable of performing the described actions or functions.

FIG. 4 illustrates an example system 400 for communicating BSRs in wireless communications. System 400 includes a UE 402 (e.g., UE 115 of FIG. 1, UE 206 of FIG. 2, UE 350 of FIG. 3) that communicates with a base station 404 (e.g., base station 105 of FIG. 1, base station 204 of FIG. 2, base station 310 of FIG. 3) to receive an allocation of resources to communicate with another UE (not shown) using message-based communications (e.g., V2X communications). In an example, base station 404 and UE 402 may have established one or more downlink channels over which to communicate downlink signals 408, which can be transmitted by base station 404 (e.g., via transceiver 456) and received by UE 402 (e.g., via transceiver 406) for communicating control and/or data messages (e.g., in signaling) from the base station 404 to the UE 402 over configured communication resources. Moreover, for example, base station 404 and UE 402 may have established one or more uplink channels over which to communicate via uplink signals 408, which can be transmitted by UE 402 (e.g., via transceiver 406) and received by base station 404 (e.g., via transceiver 456) for communicating control and/or data messages (e.g., in signaling) from the UE 402 to the base station 404 over configured communication resources. In an example, communicating component 361 can generate and transmit a BSR 480, as described, to facilitate resource allocation by the base station 404. In an example, base station 404 may include a UE or a UE communicating directly with UE 402 may include one or more components described below with respect to base station 404 to allow the UE to grant or otherwise negotiate resources with UE 402 to allow UE 402 to communicate entire messages based on a message size, type, etc. indicated in BSR 480.

In an aspect, UE 402 may include one or more processors 403 and/or a memory 405 that may be communicatively coupled, e.g., via one or more buses 407, and may operate in conjunction with or otherwise implement communicating component 361 for generating and/or transmitting (e.g., in conjunction with transceiver 406) BSRs that indicate at least sizes for a plurality of messages to one or more base stations to facilitate allocating of resources from the base stations for communicating the messages. For example, the various operations related to communicating component 361 as described herein may be implemented or otherwise executed by one or more processors 403 and, in an aspect, can be executed by a single processor, while in other aspects, different ones of the operations may be executed by a combination of two or more different processors. For example, in an aspect, the one or more processors 403 may include any one or any combination of a modem processor, or a baseband processor, or a digital signal processor, or an application specific integrated circuit (ASIC), or a transmit processor, receive processor, or a transceiver processor associated with transceiver 406. Further, for example, the memory 405 may be a non-transitory computer-readable medium that includes, but is not limited to, random access memory (RAM), read only memory (ROM), programmable ROM (PROM), erasable PROM (EPROM), electrically erasable PROM (EEPROM), a magnetic storage device (e.g., hard disk, floppy disk, magnetic strip), an optical disk (e.g., compact disk (CD), digital versatile disk (DVD)), a smart card, a flash memory device (e.g., card, stick, key drive), a register, a removable disk, and any other suitable medium for storing software and/or computer-readable code or instructions that may be accessed and read by a computer or one or more processors 403. Moreover, memory 405 or computer-readable storage medium may be resident in the one or more processors 403, external to the one or more processors 403, distributed across multiple entities including the one or more processors 403, etc.

In particular, the one or more processors 403 and/or memory 405 may execute actions or operations defined by communicating component 361 or its subcomponents. In addition, for example, communicating component 361 may include one or more buffers 410 that include a plurality of messages (e.g., message 1, message 2, etc.) for communicating to one or more other UEs. Buffer(s) 410, for example, may be stored by memory 405 and accessible by processor(s) 403, transceiver 406, etc. via bus 407. Furthermore, for instance, the one or more processors 403 and/or memory 405 may execute actions or operations defined by a BSR generating component 412 for generating a BSR providing a status of buffer 410, which may include indicating a size of each of a plurality of messages in the buffer 410, a number of messages in the buffer 410, a type of the messages in the buffer 410, a target range, transmission power, priority, latency, etc. for the messages in the buffer 410, and/or the like. In an aspect, for example, BSR generating component 412 may include hardware (e.g., one or more processor modules of the one or more processors 403) and/or computer-readable code or instructions stored in memory 405 and executable by at least one of the one or more processors 403 to perform the specially configured BSR generating operations described herein.

In an aspect, the one or more processors 403 and/or memory 405 may optionally execute actions or operations defined by a message size indicating component 414 for determining and/or indicating a size of each of the plurality of messages in buffer 410. In an aspect, for example, message size indicating component 414 may include hardware (e.g., one or more processor modules of the one or more processors 403) and/or computer-readable code or instructions stored in memory 405 and executable by at least one of the one or more processors 403 to perform the specially configured message size indicating operations described herein. In an aspect, the one or more processors 403 and/or memory 405 may optionally execute actions or operations defined by a message type indicating component 416 for determining and/or indicating a type of each of the plurality of messages in buffer 410. In an aspect, for example, message type indicating component 416 may include hardware (e.g., one or more processor modules of the one or more processors 403) and/or computer-readable code or instructions stored in memory 405 and executable by at least one of the one or more processors 403 to perform the specially configured message type indicating operations described herein.

Similarly, in an aspect, base station 404 may include one or more processors 453 and/or a memory 455 that may be communicatively coupled, e.g., via one or more buses 457, and may operate in conjunction with or otherwise implement a scheduling component 302 for allocating resources for one or more UEs based on BSRs that indicate at least sizes for a plurality of messages for communicating from the UE 402 to one or more other UEs. For example, the various functions related to scheduling component 302 may be implemented or otherwise executed by one or more processors 453 and, in an aspect, can be executed by a single processor, while in other aspects, different ones of the functions may be executed by a combination of two or more different processors, as described above. It is to be appreciated, in one example, that the one or more processors 453 and/or memory 455 may be configured as described in examples above with respect to the one or more processors 403 and/or memory 405 of UE 402.

In an example, the one or more processors 453 and/or memory 455 may execute actions or operations defined by scheduling component 302 or its subcomponents. For instance, the one or more processors 453 and/or memory 455 may execute actions or operations defined by a BSR processing component 430 for processing one or more BSRs received from one or more UEs to determine a size, and/or other parameters, of one or more messages in a buffer of the one or more UEs. In an aspect, for example, BSR processing component 430 may include hardware (e.g., one or more processor modules of the one or more processors 453) and/or computer-readable code or instructions stored in memory 455 and executable by at least one of the one or more processors 453 to perform the specially configured BSR processing operations described herein. Further, for instance, the one or more processors 453 and/or memory 455 may execute actions or operations defined by a resource allocating component 432 for allocating resources to the one or more UEs for transmitting the one or more messages based at least in part on the size and/or other parameters of the one or more messages. In an aspect, for example, resource allocating component 432 may include hardware (e.g., one or more processor modules of the one or more processors 453) and/or computer-readable code or instructions stored in memory 455 and executable by at least one of the one or more processors 453 to perform the specially configured resource allocating operations described herein.

Further, for instance, the one or more processors 453 and/or memory 455 may optionally execute actions or operations defined by a message size determining component 434 for determining a size of one or more messages based on the BSR. In an aspect, for example, message size determining component 434 may include hardware (e.g., one or more processor modules of the one or more processors 453) and/or computer-readable code or instructions stored in memory 455 and executable by at least one of the one or more processors 453 to perform the specially configured message size determining operations described herein. Further, for instance, the one or more processors 453 and/or memory 455 may optionally execute actions or operations defined by a message type determining component 436 for determining a type of one or more messages based on the BSR. In an aspect, for example, message type determining component 436 may include hardware (e.g., one or more processor modules of the one or more processors 453) and/or computer-readable code or instructions stored in memory 455 and executable by at least one of the one or more processors 453 to perform the specially configured message type determining operations described herein.

It is to be appreciated that transceivers 406, 456 may be configured to transmit and receive wireless signals through one or more antennas, an RF front end, one or more transmitters, and one or more receivers. In an aspect, transceivers 406, 456 may be tuned to operate at specified frequencies such that UE 402 and/or base station 404 can communicate at a certain frequency. In an aspect, the one or more processors 403 may configure transceiver 406 and/or one or more processors 453 may configure transceiver 456 to operate at a specified frequency and power level based on a configuration, a communication protocol, etc. to communicate uplink signals and/or downlink signals over related uplink or downlink communication channels over the one or more CCs.

In an aspect, transceivers 406, 456 can operate in multiple bands (e.g., using a multiband-multimode modem, not shown) such to process digital data sent and received using transceivers 406, 456. In an aspect, transceivers 406, 456 can be multiband and be configured to support multiple frequency bands for a specific communications protocol. In an aspect, transceivers 406, 456 can be configured to support multiple operating networks and communications protocols. Thus, for example, transceivers 406, 456 may enable transmission and/or reception of signals based on a specified modem configuration.

In an aspect, as described, where the UE 402 communicates using V2X, for example, the messages in buffer 410 (e.g., message 1, message 2, and/or other messages not shown) may relate to safety messages defined for V2X communications, such as forward collision warnings, periodic status reports, etc. of the vehicle related to UE 402. Thus, for example, base station 404 may allocate resources to the UE 402 for communicating the messages (e.g., in their entirety in a single transmission) to one or more other UEs (e.g., in a vehicle or on a pedestrian), other nodes in the network infrastructure, etc. (not shown).

FIG. 5 illustrates an example method 500 for communicating (e.g., by a UE) a BSR indicating at least a size of each of a plurality of messages stored in a buffer of a UE. Method 500 includes, at Block 502, generating a BSR indicating a size of each of a plurality of messages stored in a buffer of the device for communicating from the device to one or more other devices. In an aspect, BSR generating component 412 (FIG. 4), e.g., in conjunction with processor(s) 403, memory 405, and/or transceiver 406, generates the BSR indicating the size of each of a plurality of messages stored in buffer 410 (e.g., message 1, message 2, and/or additional messages not shown). For example, message size indicating component 414 can determine sizes of at least a portion of a plurality of messages in buffer 410. For example, each message may have an associated length indicating in a related parameter, determinable based on analyzing a location in memory 405 where the message resides (e.g., determining a number of bytes in memory 405 utilized by the message), etc. In any case, BSR generating component 412 can generate the BSR to indicate the sizes of at least a portion of the messages stored in buffer 410. In one example, BSR generating component 412 can generate the BSR to include a list of message sizes (e.g., as numbers of bytes). In this example, the number of messages sizes in the list may also implicitly indicate the number of messages in the buffer 410 (e.g., where an entity receiving the BSR can determine the number of messages based on determining the number of message sizes in the list indicated by the BSR). In yet another example, BSR generating component 412 can generate the BSR to explicitly indicate the number of messages in the buffer 410 (e.g., as a parameter defined in the BSR). Moreover, for example, the list of message sizes can implicitly indicate a priority for the messages in buffer 410 (e.g., the size of a message with the highest priority can be listed as the first message size in the list of message sizes indicated in the BSR).

In an example, generating the BSR at Block 502 can optionally include, at Block 504, generating the BSR indicating a message type of each of the plurality of messages stored in the buffer. In an aspect, BSR generating component 412, e.g., in conjunction with processor(s) 403, memory 405, and/or transceiver 406, can generate the BSR indicating the message type of each of the plurality of messages stored in the buffer 410. For example, message type indicating component 416 can determine the message type for each of the plurality of messages, and BSR generating component 412 can include the message types in the BSR (e.g., as one or more parameters indicated in the BSR).

In an example, message type indicating component 416 may determine the message type based at least in part on information in the message (e.g. a type specified in one or more headers of the message based on a protocol of the application layer, and/or the like). The message type (e.g., service type in V2X communications) may indicate whether each of the plurality messages is a collision warning (such as a forward collision warning), a periodic status report (e.g., of one or more parameters related to vehicle health, driving statistics, etc.), or other service type in V2X communications. In another example, message type indicating component 416 may determine a priority related to the message type (e.g., based on mapping the message type to a priority as indicated in a configuration stored at the UE 402, received from the base station 404 in a network configuration, etc., based on a priority indicated in the message, and/or the like). Thus, in an example, the message type may be additionally or alternatively used to indicate or determine a priority for the one or more messages. In any case, for example, a resource allocation for communicating messages may be determined based on priority, as described further herein.

In addition, for example, generating the BSR indicating the message types at Block 504 may optionally include, at Block 506, selecting a logical channel group identifier (LCGID) to indicate the message type of each (or at least a portion) of the plurality of messages, and including the LCGIDs in the BSR. In an aspect, message type indicating component 416, e.g., in conjunction with processor(s) 403, memory 405, and/or transceiver 406, can select the LCGID to indicate the message type of each of the plurality of messages, and can include the LCGIDs in the BSR. In this example, message type indicating component 416 may receive a mapping of LCGIDs to message types, which may be stored in a configuration at the UE 402, received from the base station 404 in a network configuration, etc. In one example, UE 402 can transmit the mapping to the base station 404. In any case, the message type indicating component 416 selects the LCGID based on the mapping to indicate a type of each of the plurality of messages, and may include the LCGIDs in the BSR.

In another example, generating the BSR at Block 502 may optionally include, at Block 508, generating the BSR indicating a target range, transmission power, priority, and/or latency for each of the plurality of messages stored in the buffer. In an aspect, BSR generating component 412, e.g., in conjunction with processor(s) 403, memory 405, and/or transceiver 406, can generate the BSR indicating the target range, target transmission power, target priority, and/or target latency for each of the plurality of messages. This information may be used to generate a resource allocation for the UE 402 to transmit one or more of the plurality of messages to another UE, as described further herein (e.g., additional resources may be granted for higher requested ranges, powers, priorities, etc., lower latencies, and/or the like).

Method 500 includes, at Block 510, transmitting the BSR to a base station to request resources for communicating one or more of the plurality of messages to the one or more other devices. In an aspect, communicating component 361, e.g., in conjunction with processor(s) 403, memory 405, and/or transceiver 406, transmits the BSR 480 to the base station 404 to request resources for communicating the one or more of the plurality of messages to the one or more other devices, where the BSR indicates a size of each of a plurality of messages, and may indicate message types of at least a portion of the plurality of messages, etc., as described. In an example, the base station 404 may determine a resource allocation for the UE 402 to communicate one or more messages in the buffer 410 based on the BSR. Accordingly, method 500 may also optionally include, at Block 512, receiving a resource allocation from the base station for communicating the one or more of the plurality of messages to the one or more other devices based at least in part on the BSR. In an aspect, communicating component 361, e.g., in conjunction with processor(s) 403, memory 405, and/or transceiver 406, can receive the resource allocation from the base station 404 for communicating the one or more of the plurality of messages to the one or more other devices (e.g., other UEs) based at least in part on the BSR. The resource allocation may include an amount of resources sufficient to transmit one or more of the messages in the buffer 410 based on message size(s) of each of the one or more messages indicated in the BSR 480.

Method 500 may optionally include, at Block 514, communicating the one or more of the plurality of messages to the one or more devices based on the resource allocation. In an aspect, communicating component 361, e.g., in conjunction with processor(s) 403, memory 405, and/or transceiver 406, can communicate the one or more of the plurality of messages to the one or more devices based on the resource allocation. For example, the one or more other devices may include one or more UEs, the eNB, another eNB, or substantially any node in the wireless network. Thus, for example, communicating the one or more of the plurality of messages can include transmitting the one or more messages to the one or more UEs using sidelink communications (e.g., device-to-device communication without using an intermediate base station) over the resources in the resource allocation, to one or more base stations using uplink communications over the resources in the resource allocation, and/or the like.

FIG. 6 illustrates an example method 600 for communicating (e.g., receiving by an eNB) a BSR indicating at least a size of each of a plurality of messages stored in a buffer of a UE. Method 600 includes, at Block 602, receiving a BSR from a device, wherein the BSR indicates a size of each of a plurality of messages stored in a buffer of the device for communicating from the device to one or more other devices. In an aspect, scheduling component 302 (FIG. 4), e.g., in conjunction with processor(s) 453, memory 455, and/or transceiver 456, can receive the BSR 480 from the device (e.g., UE 402), wherein the BSR indicates the size of each of the plurality of messages stored in the buffer 410 of the device. For example, scheduling component 302 may receive the BSR 480 from the UE 402 over communications resources allocated by the base station 404 for UE 402 (e.g., control data resources). UE 402 can accordingly communicate control data to the base station 404 (such as the BSR 480) over the resources. The BSR may include the size of each of a plurality of messages in buffer 410, which can assist the base station 404 in allocating data resources to the UE 402 for communicating one or more of the plurality of messages to one or more other devices (not shown).

Method 600 also includes, at Block 604, determining an allocation of resources for the device to facilitate communicating from the device to one or more devices based at least in part on the size of at least one of the plurality of messages as indicated in the BSR. In an aspect, BSR processing component 430, e.g., in conjunction with processor(s) 453, memory 455, and/or transceiver 456, can determine an allocation of resources for the device (e.g., UE 402) to facilitate communicating from the device to one or more devices based at least in part on the size of at least one of the plurality of messages as indicated in the BSR. For example, message size determining component 434 can determine the size of the at least one of the plurality of messages based on processing the BSR to determine the message size. For example, message size determining component 434 can determine a message size for a first message indicated in the BSR, a message having a highest priority as indicated by the BSR (e.g., explicitly for each message size indicated in the BSR, implicitly by an ordering of the message sizes in the BSR, etc.). BSR processing component 430 can determine the allocation of resources for transmitting the at least one of the plurality of messages (e.g., determine a number of bits/bytes or time/frequency resources for transmitting a number of bits/bytes occupied by the at least one of the plurality of messages, as indicated in the BSR). For example, the allocation of resources can relate to device-to-device communications (e.g., V2X communications) to allow the UE 402 to directly communicate one or more of the messages (e.g., in its entirety in a single transmission) to one or more other UEs (e.g., with the assistance of the base station 404 to allocate the communication resources).

Method 600 also includes, at Block 606, transmitting an indication of the allocation of resources to the device. In an aspect, resource allocating component 432, e.g., in conjunction with processor(s) 453, memory 455, and/or transceiver 456, can transmit the indication of the allocation of resources to the device (e.g., UE 402). For example, resource allocating component 432 can transmit the indication in a resource grant to the UE 402 (e.g., over a downlink control channel), which may include an indication of time and/or frequency resources over which the UE 402 can transmit one or more messages in the buffer 410 as indicated by the BSR.

In an example, receiving the BSR from the device at Block 602 may include, at Block 608, receiving the BSR from the device indicating a message type for each of the plurality of messages stored in the buffer of the device. In an aspect, scheduling component 302, e.g., in conjunction with processor(s) 453, memory 455, and/or transceiver 456, can receive the BSR 480 from the device (e.g., UE 402) indicating the message type for each of the plurality of messages stored in the buffer (e.g., buffer 410) of the device. Thus, for example, determining the allocation of resources at Block 604 may include, at Block 610, determining the allocation of resources for the device based on the message type for the at least one of the plurality of messages. In an aspect, BSR processing component 430, e.g., in conjunction with processor(s) 453, memory 455, and/or transceiver 456, can determine the allocation of resources for the device (e.g., UE 402) based on the message type for the at least one of the plurality of messages. For example, message type determining component 436 can determine the message type by processing the BSR and determining one or more message types associated with each of the plurality of messages. For example, the message type may indicate collision warnings (e.g., forward collision warnings), periodic status reports (e.g., of one or more parameters related to vehicle health, driving statistics, etc.), etc. In one example, the one or more message types may implicitly indicate the message size. BSR processing component 430 may prioritize certain message types over other message types, and may thus determine an allocation of resources for one or more of the messages based on message type and/or a corresponding priority (e.g., based on determining a message with a type of the highest indicated or implied priority, as described above, and determining a resource allocation sufficient for communicating the message based on the indicated message size, etc.).

In a specific example, as described, the BSR can indicate a LCGID to specify the message type. In this example, receiving the BSR indicating the message type at Block 608 may include, at Block 612, determining the message type based at least in part on an LCGID indicated in the BSR. In an aspect, message type determining component 436, e.g., in conjunction with processor(s) 453, memory 455, and/or transceiver 456, can determine the message type based at least in part on the LCGID indicated in the BSR. For example, the LCGID may be indicated as part of control data that includes the BSR, and may be used to indicate the message type based at least in part on a mapping of LCGIDs to message types. As described, message type determining component 436 may receive the mapping of LCGIDs to message types from a stored configuration, from a configuration received from one or more network components, from the UE 402, and/or the like. In another example, message type determining component 436 may provision the configuration to UE 402 to allow the UE 402 to use the LCGID to indicate the message type. In any case, message type determining component 436 may utilize the mapping to determine a message type based on a specified LCGID.

In another example, receiving the BSR at Block 602 may optionally include, at block 614, receiving the BSR from the device indicating a target range, transmission power, priority, or latency for each of the plurality of messages. In an aspect, scheduling component 302, e.g., in conjunction with processor(s) 453, memory 455, and/or transceiver 456, can receive the BSR from the device (e.g., UE 402) indicating the target range, target transmission power, target priority, or target latency for each of the plurality of messages. Accordingly, in this example, determining the allocation of resources at Block 604 or Block 610 may be further based at least in part on the target range, target transmission power, target priority, target latency, etc. for at least one message as indicated in the BSR.

In a specific example, BSR processing component 430 may select the at least one message for which to provide a resource allocation based on the target range, target transmission power, target priority, target latency, etc. For example, BSR processing component 430 may select the at least one message based on a number of resources available at the base station 404 for allocating and a number of resources for achieving the target range, transmission power, latency, etc. for the at least one message. In another example, BSR processing component 430 can determine the at least one message for which to allocate resources based at least in part on the message type, size, priority, etc. and then determine a resource allocation for the message such to achieve the associated target range, target transmission power, target latency, etc. In one example, it is to be appreciated that the BSR may specify the target range, transmission power, and/or latency for a plurality of messages (e.g., a single range, power, latency, etc. for all messages or a group of messages in the BSR).

Method 600 may optionally include, at Block 616, receiving one or more messages from the device over the resources. In an aspect, scheduling component 302, e.g., in conjunction with processor(s) 453, memory 455, and/or transceiver 456, can receive the one or more messages from the device (e.g., UE 402) over the resources. As described, for example, UE 402 may transmit one or more messages to the base station 404, such as periodic status reports for reporting to a server rather than (or in addition to) sidelink reporting to one or more UEs.

It is understood that the specific order or hierarchy of steps in the processes disclosed is an illustration of exemplary approaches. Based upon design preferences, it is understood that the specific order or hierarchy of steps in the processes may be rearranged. Further, some steps may be combined or omitted. The accompanying method claims present elements of the various steps in a sample order, and are not meant to be limited to the specific order or hierarchy presented.

The previous description is provided to enable any person skilled in the art to practice the various aspects described herein.

## Claims

1. A method (500) for communicating buffer status reports, BSR, in wireless communications, comprising:
generating (502), at a device (115, 402), a BSR (480) indicating a size of each of a plurality of device-to-device, D2D, messages stored in a buffer (410) of the device (115, 402) for communicating from the device (115, 402) to one or more other devices; and
transmitting (510) the BSR (480) to a base station (105, 404) to request respective D2D resources for communicating one or more of the plurality of D2D messages to the one or more other devices.

2. The method of claim 1, wherein the BSR includes an indication of a number of the plurality of D2D messages stored in the buffer of the device.

3. The method of claim 1, wherein the BSR includes a message type for each of the plurality of D2D messages stored in the buffer of the device.

4. The method of claim 3, wherein the BSR indicates the message type based at least in part on specifying a logical channel group identifier in the BSR.

5. The method of claim 4, further comprising:
receiving a mapping of a plurality of logical channel group identifiers to a plurality of message types; and
selecting the logical channel group identifier from the plurality of logical channel group identifiers that corresponds to the message type in the mapping for indicating in the BSR.

6. The method of claim 5, wherein receiving the mapping comprises at least one of obtaining the mapping from a configuration stored in the device or receiving the mapping from the base station.

7. The method of claim 5, further comprising transmitting the mapping from the device to the base station.

8. The method of claim 1, wherein the BSR includes at least one of a target range, a target transmission power, a target priority, or a target latency for each of the plurality of messages.

9. The method of claim 1, wherein the BSR indicating the size of each of the plurality of D2D messages in the buffer indicates a priority for each of the messages in the buffer, the size of the message with the highest priority being listed first in the BSR.

10. The method of claim 1, further comprising receiving a resource allocation from the base station for communicating the one or more of the plurality of D2D messages to the one or more other devices, wherein the resource allocation is based at least in part on the BSR.

11. The method of claim 10, wherein communicating the one or more of the plurality of D2D messages to the one or more other devices comprises transmitting, based on the resource allocation, the one or more of the plurality of D2D messages to at least one of a user equipment, UE, using sidelink communications, or the base station using uplink communications.

12. An apparatus (115, 402) for communicating buffer status reports, BSR, in wireless communications, comprising:
means for generating (361, 412) a BSR (480) indicating a size of each of a plurality of device-to-device, D2D, messages stored in a buffer (410) for communicating one or more of the plurality of D2D messages to one or more devices; and
means for transmitting (352, 406) the BSR (480) to a base station (105, 404) to request respective D2D resources for communicating the one or more of the plurality of D2D messages to the one or more devices.

13. The apparatus of claim 12, wherein the BSR includes an indication of a number of the plurality of D2D messages stored in the buffer.

14. The apparatus of claim 12, wherein the BSR includes a message type for each of the plurality of D2D messages stored in the buffer, wherein the BSR indicates the message type based at least in part on specifying a logical channel group identifier in the BSR.

15. A computer-readable medium (360, 405) storing computer executable code, for communicating buffer status reports, BSR, in wireless communications,
the code when executed by a computer, cause the computer to carry out the steps of:
generating, at a device (115,402), a BSR (480) indicating a size of each of a plurality of device-to-device, D2D, messages stored in a buffer (410) of the device (115, 402) for communicating from the device (115, 402) to one or more other devices; and
transmitting the BSR (480) to a base station (105, 404) to request respective D2D resources for communicating one or more of the plurality of D2D messages to the one or more other devices.

## Patentansprüche

1. Verfahren (500) zum Kommunizieren von Pufferstatusberichten bzw. BSRs (BSR = buffer status report) in Drahtloskommunikationen, das Folgendes aufweist:
Generieren (502), an einer Einrichtung (115, 402), eines BSR (480), der eine Größe von jeder einer Vielzahl von Einrichtung-zu-Einrichtung- bzw. D2D-Nachrichten (D2D = device-to-device) anzeigt, die in einem Puffer (410) der Einrichtung (115, 402) zum Kommunizieren von der Einrichtung (115, 402) an eine oder mehrere andere Einrichtungen gespeichert sind; und
Senden (510) des BSR (480) an eine Basisstation (105, 404) zum Anfragen jeweiliger D2D-Ressourcen zum Kommunizieren einer oder mehrerer der Vielzahl von D2D-Nachrichten an die eine oder die mehreren anderen Einrichtungen.

2. Verfahren nach Anspruch 1, wobei der BSR eine Anzeige einer Anzahl der Vielzahl von D2D-Nachrichten beinhaltet, die in dem Puffer der Einrichtung gespeichert sind.

3. Verfahren nach Anspruch 1, wobei der BSR einen Nachrichtentyp für jede der Vielzahl von D2D-Nachrichten beinhaltet, die in dem Puffer der Einrichtung gespeichert sind.

4. Verfahren nach Anspruch 3, wobei der BSR den Nachrichtentyp basierend wenigstens teilweise auf Spezifizieren eines Logikkanalgruppenidentifikators in dem BSR anzeigt.

5. Verfahren nach Anspruch 4, das weiter Folgendes aufweist:
Empfangen einer Zuordnung einer Vielzahl von Logikkanalgruppenidentifikatoren zu einer Vielzahl von Nachrichtentypen; und
Auswählen des Logikkanalgruppenidentifikators aus der Vielzahl von Logickanalgruppenidentifikatoren, der dem Nachrichtentyp in der Zuordnung entspricht, zum Anzeigen in dem BSR.

6. Verfahren nach Anspruch 5, wobei das Empfangen der Zuordnung wenigstens Erlangen der Zuordnung aus einer Konfiguration, die in der Einrichtung gespeichert ist, oder Empfangen der Zuordnung von der Basisstation aufweist.

7. Verfahren nach Anspruch 5, das weiter Senden der Zuordnung von der Einrichtung an die Basisstation aufweist.

8. Verfahren nach Anspruch 1, wobei der BSR wenigstens eines von einem Zielbereich, einer Zielsendeleistung, einer Zielpriorität oder einer Ziellatenz für jede der Vielzahl von Nachrichten beinhaltet.

9. Verfahren nach Anspruch 1, wobei der BSR, der die Größe jeder der Vielzahl von D2D-Nachrichten in dem Puffer anzeigt, eine Priorität für jede der Nachrichten in dem Puffer anzeigt, wobei die Größe der Nachricht mit der höchsten Priorität als erstes in dem BSR aufgelistet ist.

10. Verfahren nach Anspruch 1, das weiter Empfangen einer Ressourcenzuteilung von der Basisstation zum Kommunizieren der einen oder mehreren der Vielzahl von D2D-Nachrichten an die eine oder die mehreren anderen Einrichtungen aufweist, wobei die Ressourcenzuteilung wenigstens teilweise auf dem BSR basiert.

11. Verfahren nach Anspruch 10, wobei das Kommunizieren der einen oder mehreren der Vielzahl von D2D-Nachrichten an die eine oder die mehreren anderen Einrichtungen Senden, basierend auf der Ressourcenzuteilung, der einen oder mehreren der Vielzahl von D2D-Nachrichten an wenigstens eine von einer Nutzereinrichtung bzw. UE, die Sidelink-Kommunikationen nutzt, oder die Basisstation, die Uplink-Kommunikationen nutzt, aufweist.

12. Eine Vorrichtung (115, 402) zum Kommunizieren von Pufferstatusberichten bzw. BSRs (BSR = buffer status report) in Drahtloskommunikationen, die Folgendes aufweist:
Mittel zum Generieren (361, 412) eines BSR (480), der eine Größe von jeder einer Vielzahl von Einrichtung-zu-Einrichtung- bzw. D2D-Nachrichten (D2D = device-to-device) anzeigt, die in einem Puffer (410) gespeichert sind, zum Kommunizieren von einer oder mehreren der Vielzahl von D2D-Nachrichten an eine oder mehrere Einrichtungen; und
Mittel zum Senden (352, 406) des BSR (480) an eine Basisstation (105, 404) zum Anfragen jeweiliger D2D-Ressourcen zum Kommunizieren der einen oder mehreren der Vielzahl von D2D-Nachrichten an die eine oder die mehreren anderen Einrichtungen.

13. Vorrichtung nach Anspruch 12, wobei der BSR eine Anzeige einer Anzahl der Vielzahl von D2D-Nachrichten, die in dem Puffer gespeichert sind, beinhaltet.

14. Vorrichtung nach Anspruch 12, wobei der BSR einen Nachrichtentyp für jede der Vielzahl von D2D-Nachrichten beinhaltet, die in dem Puffer gespeichert sind, wobei der BSR den Nachrichtentyp basierend wenigstens teilweise auf Spezifizieren eines Logikkanalgruppenidentifikators in dem BSR anzeigt.

15. Ein computerlesbares Medium (360, 405), das von einem Computer ausführbaren Code zum Kommunizieren eines Pufferstatusberichts bzw. BSR (BSR = buffer status report) in Drahtloskommunikationen speichert, wobei der Code, wenn er durch einen Computer ausgeführt wird, den Computer veranlasst zum Durchführen der folgenden Schritte:
Generieren, an einer Einrichtung (115, 402), eines BSR (480), der eine Größe jeder einer Vielzahl von Einrichtung-zu-Einrichtung- bzw. D2D-Nachrichten (D2D = device-to-device) anzeigt, die in einem Puffer (410) der Einrichtung (115, 402) gespeichert sind zum Kommunizieren von der Einrichtung (115, 402) an eine oder mehrere andere Einrichtungen; und
Senden des BSR (480) an eine Basisstation (105, 404), um jeweilige D2D-Ressourcen zum Kommunizieren einer oder mehrerer der Vielzahl von D2D-Nachrichten an die eine oder die mehreren anderen Einrichtungen anzufragen.

## Revendications

1. Un procédé (500) de communication de rapports d'état de mémoire tampon, BSR, dans des communications sans fil, comprenant :
la génération (502), au niveau d'un dispositif (115, 402), d'un BSR (480) indiquant une taille de chaque message d'une pluralité de messages de dispositif à dispositif, D2D, conservés en mémoire dans une mémoire tampon (410) du dispositif (115, 402) pour une communication à partir du dispositif (115, 402) à un ou plusieurs autres dispositifs, et
la transmission (510) du BSR (480) à une station de base (105, 404) de façon à demander des ressources D2D respectives destinées à une communication d'un ou de plusieurs messages D2D de la pluralité de messages D2D aux un ou plusieurs autres dispositifs.

2. Le procédé selon la Revendication 1, où le BSR comprend une indication d'un nombre de la pluralité de messages D2D conservés en mémoire dans la mémoire tampon du dispositif.

3. Le procédé selon la Revendication 1, où le BSR comprend un type de message pour chaque message D2D de la pluralité de messages D2D conservés en mémoire dans la mémoire tampon du dispositif.

4. Le procédé selon la Revendication 3, où le BSR indique le type de message en fonction au moins en partie de la spécification d'un identifiant de groupe de canaux logiques dans le BSR.

5. Le procédé selon la Revendication 4, comprenant en outre :
la réception d'une mise en correspondance d'une pluralité d'identifiants de groupe de canaux logiques avec une pluralité de types de message, et
la sélection de l'identifiant de groupe de canaux logiques à partir de la pluralité d'identifiants de groupe de canaux logiques qui correspond au type de message dans la mise en correspondance pour l'indication dans le BSR.

6. Le procédé selon la Revendication 5, où la réception de la mise en correspondance comprend au moins une opération parmi l'obtention de la mise en correspondance à partir d'une configuration conservée en mémoire dans le dispositif ou la réception de la mise en correspondance à partir de la station de base.

7. Le procédé selon la Revendication 5, comprenant en outre la transmission de la mise en correspondance du dispositif à la station de base.

8. Le procédé selon la Revendication 1, où le BSR comprend au moins un élément parmi une portée cible, une puissance de transmission cible, une priorité cible ou un temps de latence cible pour chaque message de la pluralité de messages.

9. Le procédé selon la Revendication 1, où le BSR indiquant la taille de chaque message D2D de la pluralité de messages D2D dans la mémoire tampon indique une priorité pour chacun des messages dans la mémoire tampon, la taille du message avec la priorité la plus élevée étant répertorié en premier dans le BSR.

10. Le procédé selon la Revendication 1, comprenant en outre la réception d'une attribution de ressources à partir de la station de base pour la communication des un ou plusieurs messages D2D de la pluralité de messages D2D aux un ou plusieurs autres dispositifs, où l'attribution de ressources est basée au moins en partie sur le BSR.

11. Le procédé selon la Revendication 10, où la communication des un ou plusieurs messages D2D de la pluralité de messages D2D aux un ou plusieurs autres dispositifs comprend la transmission, en fonction de l'attribution de ressources, des un ou plusieurs messages D2D de la pluralité de messages D2D à au moins un élément parmi un équipement d'utilisateur, UE, utilisant des communications en liaison latérale ou la station de base utilisant des communications en liaison montante.

12. Un appareil (115, 402) de communication de rapports d'état de mémoire tampon, BSR, dans des communications sans fil, comprenant :
un moyen de génération (361, 412) d'un BSR (480) indiquant une taille de chaque message d'une pluralité de messages de dispositif à dispositif, D2D, conservés en mémoire dans une mémoire tampon (410) pour la communication d'un ou de plusieurs messages D2D de la pluralité de messages D2D à un ou plusieurs dispositifs, et
un moyen de transmission (352, 406) du BSR (480) à une station de base (105, 404) de façon à demander des ressources D2D respectives pour la communication des un ou plusieurs messages D2D de la pluralité de messages D2D aux un ou plusieurs dispositifs.

13. L'appareil selon la Revendication 12, où le BSR comprend une indication d'un nombre de la pluralité de messages D2D conservés en mémoire dans la mémoire tampon.

14. L'appareil selon la Revendication 12, où le BSR comprend un type de message pour chaque message D2D de la pluralité de messages D2D conservés en mémoire dans la mémoire tampon, où le BSR indique le type de message en fonction au moins en partie de la spécification d'un identifiant de groupe de canaux logiques dans le BSR.

15. Un support lisible par ordinateur (360, 405) conservant en mémoire du code exécutable par un ordinateur pour la communication de rapports d'état de mémoire tampon, BSR, dans une communications sans fil, le code, lorsqu'il est exécuté par un ordinateur, amenant l'ordinateur à exécuter les opérations suivantes :
la génération, au niveau d'un dispositif (115, 402), d'un BSR (480) indiquant une taille de chaque message d'une pluralité de messages de dispositif à dispositif, D2D, conservés en mémoire dans une mémoire tampon (410) du dispositif (115, 402) pour une communication du dispositif (115, 402) à un ou plusieurs autres dispositifs, et
la transmission du BSR (480) à une station de base (105, 404) de façon à demander des ressources D2D respectives pour la communication d'un ou de plusieurs messages D2D de la pluralité de messages D2D aux un ou plusieurs autres dispositifs.
